# FASCICULE DE BREVET EUROPEEN

(11) **EP 2 552 812 B1**
(45) Date de publication et mention de la délivrance du brevet: **12.08.2015**
(21) Numéro de dépôt: 11719594.1
(22) Date de dépôt: 28.03.2011
(51) Int. Cl.: B65H 3/08, B65H 3/46

(54) **PROCEDE ET DISPOSITIF DE TRANSFERT DE DECOUPES POUR BOITES D'EMBALLAGE**
VERFAHREN UND VORRICHTUNG ZUR ÜBERTRAGUNG VON AUSSCHNITTEN FÜR VERPACKUNGSSCHACHTELN
METHOD AND DEVICE FOR TRANSFERRING CUTOUTS FOR PACKAGING BOXES

(30) Priorité: 29.03.2010 FR 1001279
(43) Date de publication de la demande: 06.02.2013
(73) Titulaire: OTOR, 92800 Puteaux (FR)
(72) Inventeur: SAISON, Philippe, F-21121 Daix (FR); BRUNEAU, Thomas, F-21300 Chenove (FR); MENEGAZZI, Franck, F-21000 Dijon (FR); CLAUSS, Yves, F-71590 Gervy (FR); DESERTOT, Didier, F-21560 Arc-sur-Tille (FR)
(74) Mandataire: Benech, Frédéric
(86) Numéro de dépôt international: PCT/FR2011/000181
(87) Numéro de publication internationale: WO 2011/124782

(56) Documents cités:
- EP-A1- 0 639 519
- EP-A2- 1 923 341
- WO-A1-2006/108409
- WO-A1-2009/112050
- WO-A2-03/004387

## Description

La présente invention concerne un procédé pour transfert de découpes pour boîtes d'emballage à section polygonale à partir d'un magasin formé d'au moins une pile de découpes de matière en feuille de carton ou carton ondulé comportant des échancrures.

Elle concerne également un dispositif pour la réalisation d'un tel transfert en vue d'une réalisation de boîte.

On connaît déjà de nombreux procédés de formation de caisses en carton ondulé.

Ils comportent en général les étapes suivantes :
Après une prise du flan de carton par ventouse à partir d'un magasin vertical incliné, on encolle le flan ou découpe, puis on le met en volume avant de fermer par rabattement les volets formant le fond et/ou les parois de la boîte ainsi constituée.

De tels procédés nécessitent le remplissage régulier du magasin.

Pour ce faire le mode de chargement le plus répandu fait appel à l'intervention manuelle d'opérateurs à partir de palettes sur lesquelles les découpes sont empilées.

Ce chargement manuel répétitif se révèle cependant très pénible à la longue, surtout lorsque la fréquence de changement des magasins est élevée et que le poids et/ou les dimensions des découpes sont importants.

A titre d'exemple, une machine fonctionnant à une cadence de trente caisses par minute pour former des emballages de trois cent grammes, nécessite la manipulation d'environ quatre tonnes de carton par jour (sur huit heures).

Une telle manipulation pose des problèmes de santé pour les opérateurs qui expérimentent de ce fait des troubles musculo-squelettiques.

Il a donc été recherché des solutions permettant le chargement des magasins de façon automatique, sans qu'un opérateur n'ait à soulever de charges de carton.

On connaît ainsi des systèmes de préhension capables de soulever et déplacer simultanément plusieurs plaques de carton en paquets, ce qui va permettre de transférer une pile entière de cartons d'une palette vers le magasin.

La difficulté de la mise en oeuvre de tels systèmes réside ici dans la préhension de la pile.

La prise d'une pile qui se fait par des pinces latérales est en effet difficile à réaliser de façon exacte et répétitive.

Classiquement, on utilise des aiguilles insérées entre deux plaques de carton par un côté de la pile à déplacer. L'aiguille soulève légèrement la pile en biais sur le côté et permet alors l'introduction d'une ou plusieurs plaques fines ou pelles sous la pile à soulever. Avec de tels systèmes, la préhension d'un nombre exact de plaques n'est cependant pas garantie.

On connaît également un dispositif qui comporte des moyens permettant de déplacer latéralement un paquet de découpes sur une pile de façon à la faire émerger de la pile puis à soulever avec une pelle la partie du paquet qui dépasse en introduisant ensuite une plaque en dessous pour déplacer la charge.

En fait les moyens connus permettant d'éviter la fatigue pour les opérateurs consistent essentiellement à traiter les découpes par piles ou par paquets en déplaçant donc un grand nombre de découpes à la fois.

Document EP 1 923 341 A2 divulgue un dispositif et un procédé de transfert de découpes pour la réalisation de boîtes d'emballage à section polygonale à partir d'un magasin formé d'au moins une pile de découpes de matière en feuille de carton ou carton ondulé comportant des échancrures, la pile étant verticale, on saisit la découpe du dessus par aspiration, on déplace ladite découpe à l'aide d'un bras robotisé et on la libère à un poste suivant, pour ou avant formage ultérieur, et on renouvelle le cycle d'étapes avec la découpe dessus suivante.

Une telle solution présente cependant des inconvénients.

Un premier inconvénient, majeur, est de limiter la possibilité de préhension des découpes à des plans de palettisation très simples à savoir en général deux piles de cartons alignées sur une rangée.

En effet il est nécessaire que deux bords opposés des découpes soient accessibles pour que celles-ci puissent être prises avec des pinces.

Les dispositifs de l'art antérieur ne permettent donc pas de dépiler des palettes comportant plusieurs rangées de découpes, chaque rangée comportant elle-même plusieurs piles.

Or, de telles palettes, qui permettent d'optimiser les coûts de transports, sont de plus en plus souvent utilisées.

De tels dispositifs ne conviennent pas non plus si les formes des découpes permettent leur imbrication sur les palettes.

Un autre inconvénient réside dans l'impossibilité d'atteindre les découpes situées tout en bas de la palette, impossibles à extraire automatiquement. Elles sont donc souvent perdues ce qui génère un déchet important.

Enfin si les palettes ont été secouées pendant les manipulations qui précèdent leur positionnement en zone de dépilage, les découpes d'une même palette vont s'être déplacées et vont souvent s'être imbriquées les unes entre les autres.

Ce phénomène rend alors le dépilage difficile et génère des arrêts de machines avec intervention humaine pour recadrer les découpes sur la palette empêchant une réelle automatisation du processus.

La présente invention vise à pallier ces inconvénients, en proposant un procédé et un dispositif répondant mieux que ceux antérieurement connus aux exigences de la pratique, notamment en ce qu'elle autorise la dépalettisation de découpes à grandes cadences quel que soit le plan de palettisation.

L'invention trouve une application particulièrement importante bien que non exclusive dans le domaine de la formation de boîtes à partir de découpes ou plaques en carton ondulé de faible grammage (<120g/m2) pour l'industrie ou l'agro-alimentaire.

Avec l'invention il va être possible d'effectuer automatiquement le dépilage même si les découpes se sont déplacées latéralement, ont pivotées, se sont imbriquées, ou se chevauchent.

En proposant une prise unitaire de chaque découpe elle permet de plus une mise en volume optionnelle après encollage de ladite découpe par le même outil, l'inscription d'un code barre par ancrage et/ou la fixation d'une puce RFID ou de tout autre moyen de repérage, pouvant également s'effectuer en même temps et dans la continuité du mouvement.

Elle permet également d'accéder à toutes les découpes des palettes sans perte des dernières découpes.

Pour ce faire l'invention part notamment de l'idée de ne plus déplacer des paquets de plaques vers un magasin d'alimentation en général incliné, mais de traiter les découpes une à une après les avoir parfaitement localisées dans l'espace et repositionnées pendant le mouvement.

Dans ce but la présente invention propose essentiellement un procédé de transfert de découpe pour la réalisation de boîtes d'emballage à section polygonale à partir d'un magasin formé d'au moins une pile de découpes de matière en feuille de carton ou carton ondulé comportant des échancrures, caractérisé en ce que
la pile étant verticale, on localise la découpe du dessus de la pile par caméra,
on pré-décolle ladite découpe du reste de la pile,
on saisit la découpe du dessus ainsi localisée par aspiration,
on déplace ladite découpe à l'aide d'un bras robotisé et on la libère à un poste suivant, pour ou avant formage ultérieur,
et on renouvelle le cycle d'étapes ci-dessus avec la découpe de dessus suivante.

Avec le procédé selon l'invention, il est donc possible de réaliser la prise unitaire d'une découpe par aspiration c'est à dire par ventouse à partir d'une palette comportant plusieurs piles et/ou plusieurs rangées avec ou sans imbrication de découpes.

La cadence de manipulation des découpes est par ailleurs multipliée par un facteur de dix à cinquante par rapport à une manipulation de paquets, et ce malgré la difficulté de déplacer à grande vitesse dans l'espace des plaques de carton qui se comportent comme des ailes déformables.

Le soulèvement rapide d'une plaque de carton à partir d'une pile n'a par ailleurs jamais été recherché dans l'art antérieur car il génère un phénomène d'aspiration entre la plaque soulevée et les plaques situées en dessous.

Il en résulte que plusieurs des plaques situées sous la plaque soulevée changent de position latéralement et en rotation de façon totalement aléatoire à chaque prise.

Elles peuvent alors surchapper les découpes de la pile adjacente et l'homme du métier aurait trouvé trop difficile de les repérer dans l'espace et de les repositionner avec certitude à un endroit déporté.

En prédécollant les découpes et en les localisant précisément par caméra on pallie à cet inconvénient.

Dans des modes de réalisation avantageux, on a de plus recours à l'une et/ou à l'autre des dispositions suivantes :
- on encolle ladite découpe avant le poste suivant qui est un poste de formage ;
- le procédé comporte plus de trente cycles par minutes ;
- le magasin comporte plusieurs rangées et/ou plusieurs piles de découpes à partir desquels la découpe du dessus est saisie ;
- on utilise plusieurs bras robotisés travaillant en alternance ;
- le magasin de découpes étant formé par une palette,
on place la palette sur un dispositif de mise à niveau,
on fait monter le dessus de la palette jusqu'à un plan d'observation et de prise,
on détecte la découpe du dessus,
et on saisit par aspiration ladite découpe pour l'amener au poste suivant ;
- on détecte la découpe du dessus avec au moins une caméra numérique située au dessus du magasin et centrée par rapport audit magasin,
on filme les découpes du dessus,
et on transmet à un calculateur les données ainsi obtenues pour déterminer la découpe du dessus ;
- on éclaire de façon rasante les découpes du dessus pour générer des ombres du fait des échancrures et des surchappements entre découpes et on écarte les découpes qui n'ont pas toutes leur zones d'ombre comme étant en dessous ;
- on détermine la découpe la plus nette dans le plan de prise pour localiser la découpe du dessus ;
- à partir des mesures des découpes à localiser dans le plan de prise et de l'image obtenue par la ou les caméras,
on calcule la présence des quatre ou plus zones d'ombre et la distance entre ces zones, on calcule le barycentre et l'angle de la découpe par rapport à une position de référence,
on communique le résultat de ces calculs au bras robotisé muni de l'outillage d'aspiration et on déplace ledit robot pour faire coïncider ledit outillage d'aspiration avec le repère de la découpe avant de la saisir par aspiration avec le dit appareillage ;
- pour effectuer le pré-décollage et saisir la découpe du dessus par aspiration on vient positionner les ventouses sur la découpe en différents points, puis on commence à soulever un ou plusieurs cotés de la découpe tout en bloquant une partie de la découpe, pour créer au moins une entrée d'air latéral ;
- le formage se fait par pistonnement dans une cavité ;
- on forme la boîte au poste de formage par enroulement des découpes autour d'un volume déterminé ;
- on amène la découpe du dessus au poste de formage par ventouses aspirantes déplacées selon l'axe horizontal par le bras robotisé à une vitesse de translation comprise entre 4m/s et 6m/s ;
- on transfère la découpe au poste de formage par un équipage de deux chariots sur lequel est monté le bras robotisé, ledit équipage étant actionné par un système d'entraînement comprenant un agencement de poulie et de courroie avec moteur électriques ;
- on forme la boîte à partir d'une découpe comportant une suite d'au moins quatre volets principaux terminée par une languette de fixation, reliés entre eux par des premières lignes de pliage parallèles entre elles, ladite suite de volets formant les parois externes de la boîte et étant reliée d'un coté à une suite de rabats par des deuxièmes lignes de pliage perpendiculaires aux dites premières lignes de pliage, pour former le fond de la boîte ;
- on forme la boîte à partir d'une découpe comportant un panneau central et quatre rabats périphériques latéraux ;
- le procédé comporte une étape de marquage après préhension par le robot et avant dépose au poste suivant.

L'invention propose de plus un dispositif mettant en oeuvre le procédé tel que décrit ci-dessus.

L'invention concerne également un dispositif pour la réalisation de boîtes d'emballage à section polygonale à partir d'un magasin formé d'au moins une pile de découpes de matière en feuille de carton ou carton ondulé comportant des échancrures, caractérisé en ce que, la pile étant verticale, il comporte
des moyens de localisation de la découpe du dessus de la pile par caméra,
des moyens de décollage de ladite découpe par rapport au reste de la pile,
des moyens de saisie de ladite découpe par aspiration comprenant un jeu d'au moins quatre ventouses, et
un bras robotisé de déplacement latéral de ladite découpe à un poste suivant, en vue de son formage, avant retour à vide pour saisir la découpe de dessus suivante.

Dans des modes de réalisation avantageux, on a de plus recours à l'une et/ou à l'autre des dispositions suivantes :
- le dispositif comporte de plus des moyens d'encollage de ladite découpe avant le poste suivant ;
- le magasin comporte plusieurs rangées et/ou plusieurs piles de découpes à partir desquels la découpe du dessus est saisie ;
- il comporte plusieurs bras robotisés travaillant en alternance ;
- le magasin de découpes étant formé par une palette,
le dispositif comprend un plateau élévateur de mise à niveau de la palette jusqu'à un plan d'observation et de prise, et
des moyens de détection visuelle dudit plan d'observation;
- le dispositif comprend au moins une caméra numérique située au dessus du magasin et centrée par rapport audit magasin,
des moyens de stockage et de transmission des images numériques ainsi obtenues à un calculateur et
des moyens de calcul à partir des données ainsi obtenues pour déterminer la découpe du dessus ;
- il comporte des moyens d'éclairage de façon rasante des découpes du dessus pour générer des ombres du fait des échancrures et/ou des surchappements entre découpes et des moyens de sélection de la découpe pertinente agencés pour écarter les découpes qui n'ont pas toutes leur zones d'ombre comme étant en dessous. Par éclairage de façon rasante, on entent horizontalement ou avec un angle par rapport au plan de la découpe inférieur à 30 °, par exemple 15 °;
- il comporte des moyens de sélection de la découpe la plus nette dans le plan de prise pour localiser la découpe du dessus ;
- le dispositif comprend
des moyens de stockage des mesures des découpes à localiser dans le plan de prise et de l'image obtenue par la ou les caméras,
des moyens de calcul de la présence des quatre ou plus zones d'ombre et la distance entre ces zones,
des moyens de calcul du barycentre et de l'angle de la découpe par rapport à une position de référence, des moyens de transmission du résultat de ces calculs au bras robotisé muni de l'outillage d'aspiration et
de moyens pour faire coïncider ledit outillage d'aspiration avec le repère de la découpe avant de la saisir par aspiration avec le dit appareillage;
- les moyens pour décoller la découpe du dessus comprennent des élément agencés pour soulever un ou plusieurs cotés de la découpe tout en bloquant une partie de la découpe, pour créer au moins une entrée d'air latéral ;
- le dispositif comporte un poste de formage par pistonnement dans une cavité ;
- il comporte un poste de formage par enroulement des découpes autour d'un volume déterminé ;
- il comporte un équipage de deux chariots sur lequel est monté le bras robotisé, ledit équipage étant actionné par un système d'entraînement comprenant un agencement de poulie et de courroie avec moteur électriques.

L'invention sera mieux comprise à la lecture de la description qui suit de modes de réalisation donnés ci-après à titre d'exemples non limitatifs.

Elle se réfère aux dessins qui l'accompagnent dans lesquels :
La figure 1 est une vue schématique en élévation de face d'un dispositif selon un premier mode de réalisation de l'invention.
La figure 2 est la vue en élévation latérale du dispositif de la figure 1.
La figure 3 est une vue de dessus du dispositif de la figure 1.
La figure 4 est une vue de dessus d'un autre mode de réalisation d'un dispositif selon l'invention.
La figure 5 est un schéma montrant le procédé de repérage par caméra en vue de dessus.
La figure 6 est un exemple en vue de dessus de découpes en vrac et décalées, saisissables grâce au procédé selon l'invention.
La figure 7A montre en vue de dessus un exemple de palette à quatre piles légèrement décalées.
La figure 7B illustre l'étalonnage de la caméra qui permet ensuite le repérage des découpes telles que représentées sur la figure 7A.
Les figure 8 et 9 illustrent les zones d'ombre sur découpes avec éclairages latéraux, utilisables avec les caméras et les logiciels de calcul selon l'invention.
La figure 10 donne un organigramme du fonctionnement d'un mode de réalisation du procédé selon l'invention.
Les figures 11 et 12 montrent en vue latérale un dispositif selon l'invention appliqué au formage autour d'un mandrin (figure 11) et par pistonnement dans une cavité (figure 12).
Les figures 13 à 16 montrent des modes de réalisation du pré-décollage de la découpe saisie avant aspiration.
La figure 17 est un exemple de réalisation d'un outillage d'aspiration utilisable avec l'invention avec moyens de pré-décollage.
Les figures 18 à 21 montrent d'autres modes de réalisation de pré-décollage de la découpe avant saisie par aspiration.
Les figures 22 et 22A montrent un autre mode de réalisation d'un robot et/ou bras robotisé utilisable avec un dispositif selon l'invention.
La figure 23 est une vue de dessus d'un dispositif selon l'invention utilisant un robot du type décrit en référence à la figure 22.
La figure 24 est une vue latérale schématique du dispositif de la figure 23.

Dans la suite de la description on utilisera dans la mesure du possible les mêmes numéros de référence pour désigner des éléments identiques.

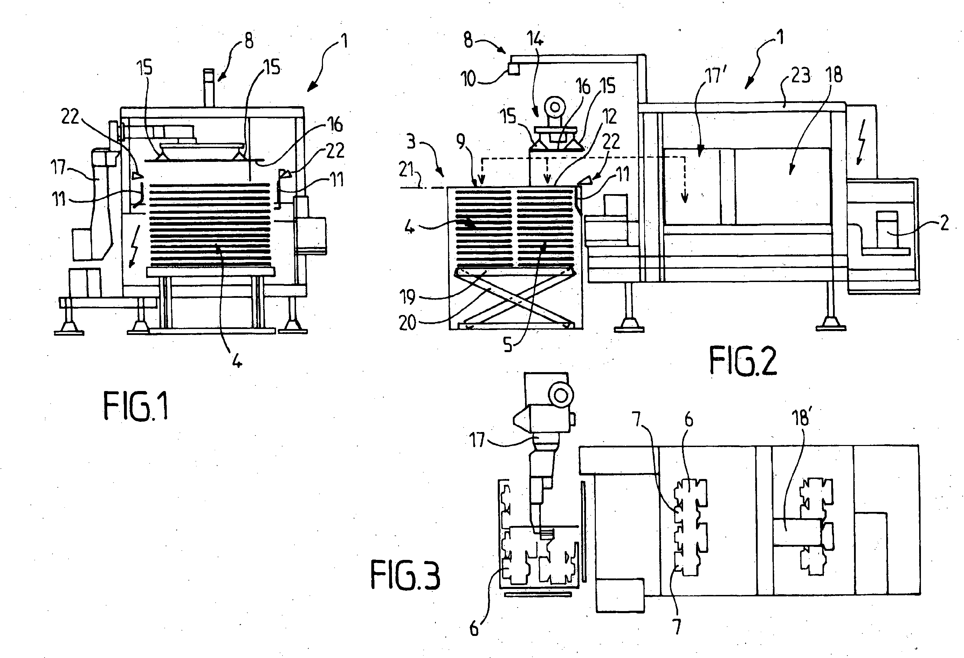

Les figures 1 à 3 montrent un dispositif 1 pour la réalisation d'une boîte 2 à partir d'un magasin 3 formé de deux piles 4 et 5 de découpes 6 de matière en feuille de carton ondulé comportant des échancrures 7.

Les piles sont verticales. Le dispositif 1 comporte des moyens 8 de localisation du dessus 9 de la pile par caméra 10, des moyens de décollage ou pré-décollage 11, qui seront détaillés par la suite, de la découpe de dessus 12 de la pile par exemple la première pile 5.

Le dispositif selon l'invention comprend de plus des moyens 14 d'aspiration comprenant par exemple quatre ou six ventouses 15 de saisie de la découpe 16.

Le dispositif 1 comprend de plus un bras robotisé 17 de déplacement latéral de la découpe aspirée et saisie à un poste suivant 17' en vue de son formage par exemple au poste d'après en 18.

Le dispositif comporte également des moyens d'encollage (non représentés) de la découpe avant le poste de formage 18 par exemple autour d'un mandrin 18'.

Plus précisément le magasin de découpe 3 est formé par une palette 19, qui est par exemple la palette qui a servi au transport, et comporte un plateau élévateur 20 de type connu en lui-même, qui permet la mise à niveau de la palette jusqu'à un plan d'observation et de prise 21 (en traits mixtes sur la figure). Des moyens de détection mécanique ou visuelle dudit plan d'observation de la découpe du dessus (non représentés), par exemple par l'intermédiaire d'un fin de course, et/ou par le biais d'un rayon infrarouge permettent d'obtenir l'emplacement exact.

Selon le mode de réalisation de l'invention plus particulièrement décrit ici, des moyens 22 d'éclairage rasant sont prévus et vont pouvoir être utilisés de façon à déterminer quelle est la découpe du dessus. Ils seront décrits plus avant par la suite.

L'ensemble des éléments du dispositif sont montés autour d'un châssis 23 de façon connue en elle-même.

Des moyens d'alimentation (non représentés) automatique et de mise au vide des ventouses sont par ailleurs bien entendu prévus de façon connue en elle-même.

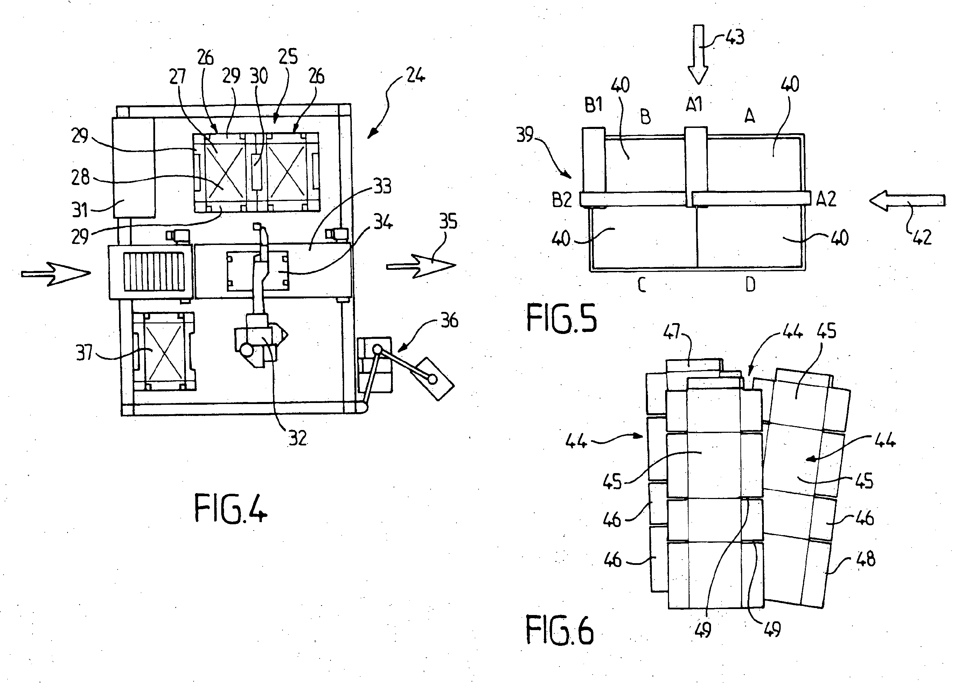

On a représenté sur la figure 4 une vue de dessus d'un autre mode de réalisation 24 d'un dispositif selon l'invention. Ici le magasin palette 25 comporte deux piles 26 de découpes 27 rectangulaires formées d'un fond 28 et de quatre volets.latéraux 29 avec des échancrures 30.

L'armoire électrique 31 permet l'alimentation électrique de l'ensemble et comporte les moyens de calculs (ordinateur, PC, etc) connus en eux-mêmes qui vont être utilisés une fois correctement programmés pour effectuer les cycles recherchés. Le bras robotisé 32 est agencé pour se déployer au dessus de magasin 25 puis venir placer sur un tapis roulant 33, de type connu, la découpe 34, en position pour ensuite être guidée et reprise (flèche 35) pour formage ultérieur.

Des moyens encolleurs 36 déplaçables latéralement viennent alors déposer les cordons de colle sur l'emballage avançant sur le tapis roulant 33.

Il peut par exemple être prévu un stock tampon 37 de découpes utilisable lorsque le magasin palette 25 doit être changé, et ce de façon à ne pas perdre la cadence.

Le bras robotisé 17 ou 32 est par exemple un robot du commerce du type utilisé dans l'industrie automobile, qui permet les déplacements selon quatre axes intelligents.

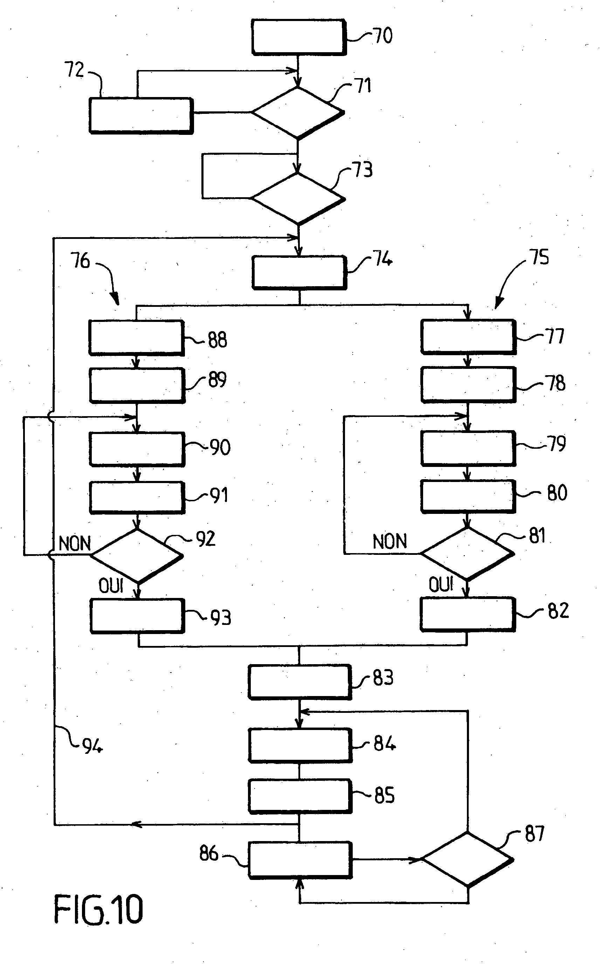

Il est capable de positionner la découpe 34 par rapport à des coordonnées fournies par le logiciel dont le fonctionnement sera décrit plus précisément en référence à la figure 10.

Pour ce faire, le bras robotisé prend la découpe dans le plan de prise situé grâce au détecteur de plan de prise, à une même altitude + 50mm, la soulève, la déplace et la repose, dans le chenal de transfert, sur le tapis roulant ou pour constituer une autre pile.

Ce dernier cas permet d'alimenter le magasin « classique » d'une machine de formation d'emballage existante.

Dans le cas où l'on veut augmenter la cadence, on pourra équiper le dispositif de plusieurs bras robot travaillant en alternance et se complétant.

Selon l'invention il est donc utilisée une caméra d'observation 10 liée à un calculateur.

Cette caméra donne au robot la position et l'angle de la découpe par rapport à un repère commun au robot et à la découpe.

Dans un mode de réalisation avantageux de l'invention, pour permettre une bonne précision et une insensibilité lumineuse aux perturbations, il est prévu un système d'éclairage rasant éclairant la zone d'observation.

Ce système d'éclairage 22 est avantageusement orienté pour éclairer les découpes avec un angle par rapport au plan de prise 21 compris entre 5 et 25°, par exemple 8°.

Un tel éclairage crée ainsi des ombres qui vont générer des contrastes permettant l'appréciation de la position de la découpe par rapport au reste de la pile sans risque d'erreur.

On a représenté sur la figure 5 un exemple en vue de dessus, de paramétrisation d'une palette 39 à quatre piles 40 de découpes en quatre zones incrémentables, chaque zone correspondant à une pile A, B, C ou D avec D+1 = A.

Dans ces zones incrémentables on va définir des sous zones correspondant au bord attendu des découpes, à savoir la zone 1 qui va être A1 pour A, B1 pour B, etc... et la zone 2 qui elle, va être perpendiculaire à la zone 1, à savoir A2 pour A, B2 pour B, etc ..

On utilise ensuite pour créer les zones d'ombre dans ces zones A1, A2, ... des éclairages forcés latéraux suivant X (flèche 42) ou suivant Y (flèche 43).

L'éclairage est soit un éclairage fixe (néon ou sources lumineuses constantes), soit un éclairage pulsé (pulsion lumineuse de temps très court du type flash).

Enfin et avant la mise en route on détermine au préalable un point de repos, c'est à dire le point où le robot doit libérer la zone de vision. Ce sera le point de passage de référence pour les déplacements de localisation de la découpe.

Le robot 17 ou 32 comprend un outillage de préhension de la découpe sur le plan de prise muni de ventouses.

Il comprend également un calculateur agencé pour calculer une trajectoire qui va à la fois permettre de prendre une découpe et une seule tout en minimisant les déplacements des autres découpes sur le plan de prise, puis qui va l'amener au point de pose, c'est à dire, comme on l'a vu, soit sur un chenal, soit dans un magasin, soit directement sur un mandrin de formage ou dans une cavité.

On a représenté sur la figure 6 en vue de dessus ce que peuvent être les positions désordonnées de découpes 44, constituées par des ceintures de volets 45 comprenant de part et d'autre des rabats 46, et terminés par une languette de collage 47 de façon connue en elle-même, sur un plan de prises tel que représenté avec l'invention.

Les éclairages rasant 42, 43 de la figure 5, permettent ici de générer des ombres au niveau des contours 48 et des échancrures 49 de ces découpes qui vont être utilisées.

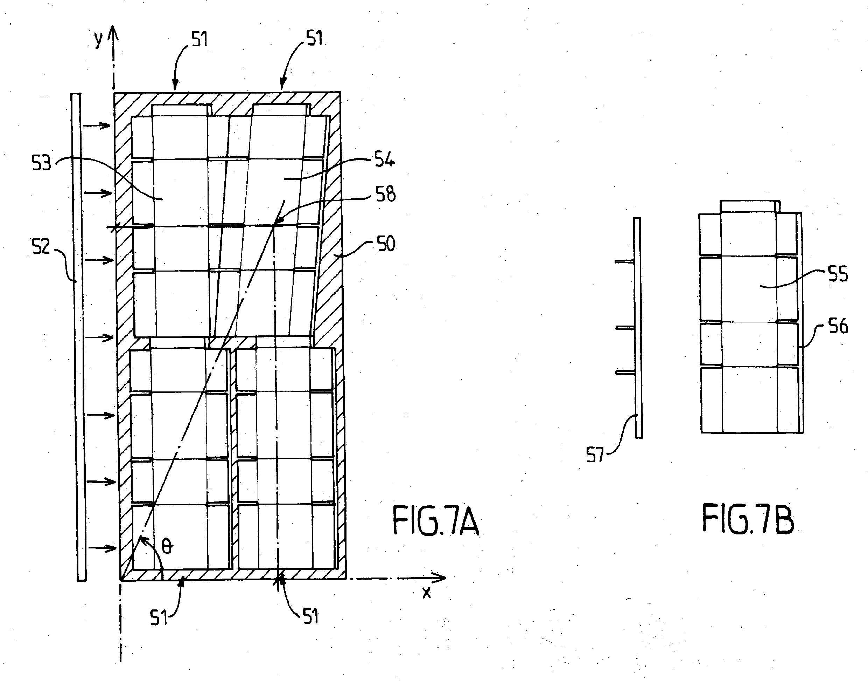

A ce sujet et avantageusement, la zone d'observation peut être capotée (de façon non représentée) pour éviter les perturbations lumineuses extérieures, qui empêcheraient une reconnaissance ou une identification parfaite de la découpe par rapport à l'image étalon enregistrée, comme décrit en référence aux figures 7A et 7B.

La figure 7A montre ici un exemple de palette 50 à quatre piles 51 de découpes du type de celle décrite en référence à la figure 6, l'éclairage (rampe 52) étant par exemple ici un éclairage, du type pulsé piloté par un logiciel d'analyse d'images de façon connue en elle-même.

Ceci permet à la lumière (néon ou LEDS) de n'être activée que lors d'une prise d'images, la pulsation variant typiquement et par exemple de 1 à 150 images par seconde.

Les lampes sont quant-à-elles typiquement positionnées à une distance de 5 à 20 cm par rapport au plan à observer avec un angle d'incidence compris entre 5 et 30°.

Sur l'exemple de la figure 7A, la découpe 53, en partie cachée par la découpe 54, va donner des coordonnées exploitables pour B, puis C, puis D (cf. figure 5) mais pas A.

Ce n'est que si A se découvre, par le retrait de B que le système prendra A.

Une identification précise des coordonnées d'une découpe de référence a été au préalable établie par rapport à une image étalon pré-enregistrée grâce au positionnement précis d'une découpe témoin 55 (figure 7B) sur le plan de prise permettant de dégager les ombres 56 générées par l'éclairage 57, de façon connue en elle-même dans le cadre de l'apprentissage de robot.

En créant des zones d'ombre on trouve le barycentre et l'angle de rotation de la découpe.

La rapidité de calcul pour trouver la position (x, y) et l'angle (θ) du barycentre 58 (voir figure 7A) de la découpe 54 située sur le dessus est tributaire des outils et du logiciel utilisé, logiciel dont la conception est à la portée de l'homme du métier.

Pour une découpe donnée un temps déterminé maximum va exister pour sa localisation, avec une répétabilité dans son positionnement inférieure à 1mm. Pour deux découpes le temps sera inférieur au temps d'une découpe multiplié par deux, etc.

Si le temps de localisation d'une découpe sort de la tolérance de contrôle elle est considérée comme non conforme.

C'est donc sur ce principe que le chevauchement entre les découpes va être traité. Anis la découpe 53 sur la figure 7A n'est pas conforme car elle n'a pas toutes ses zones d'ombre et ne peut donc pas être calculée dans le temps déterminé. Elle est donc en dessous. Dans le cas de découpes dont les piles se sont enchevêtrées et/ou de découpes qui se sont déplacées du fait de la prise d'autres découpes, ce principe permet de détecter la découpe à prendre au dessus des autres.

A chaque prise d'image on inspecte donc les zones A, B, C et D.

Tant qu'il n'y a pas de recouvrement, les compteurs s'incrémentent 1 à 1.

Si la découpe suivante est recouverte, alors on prend celle qui suit (si est elle conforme) et ainsi de suite.

Une autre méthode, utilisable avec le procédé selon l'invention consiste à déterminer la découpe la plus nette correspondant à l'étalon (cf. figure 7B).

Plus l'algorithme de mesure est complexe plus la puissance de calcul doit être importante pour traiter l'image. Avec des plans de palétisation complexes, des systèmes d'éclairage désynchronisés entre eux de façon à permettre un traitement adéquats sont par exemple également prévus.

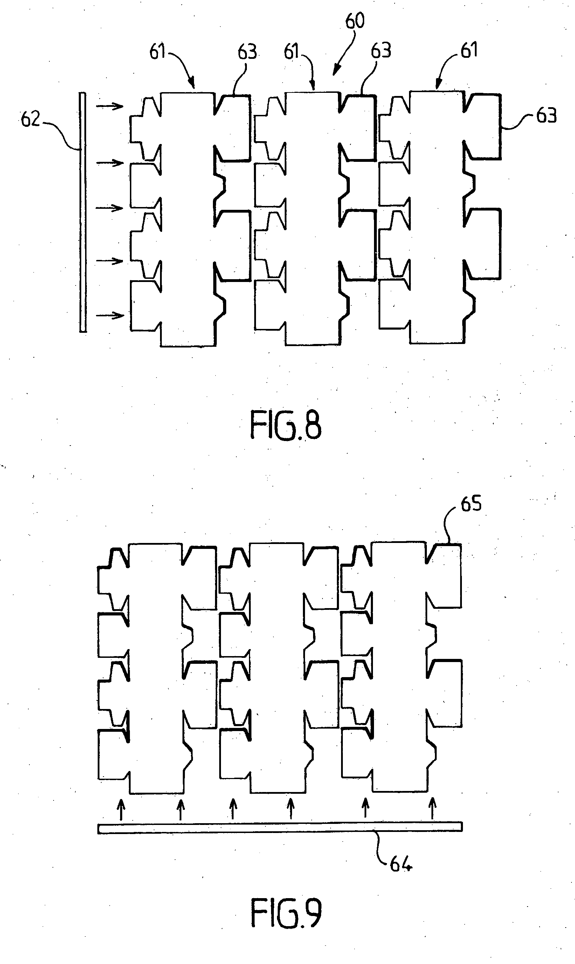

On a représenté sur les figures 8 et 9, un exemple de palette 60 à trois piles 61, avec éclairage latéral 62, 64 générant les ombres 63, 65 (traits gras sur les figures 8 et 9).

Le logiciel gère alors simultanément les deux éclairages et compare les images prises par la caméra sous deux angles, à deux images de référence correspondantes.

Dans des cas simples on peut par contre se limiter à un éclairage et à une image de référence, comme décrit ci-avant.

De façon connue en elle-même, le robot est programmé pour guider les opérateurs dans la création de nouveaux formats.

Une fois celle-ci réalisée, le robot passe en mode production correspondant au format sélectionné (format étalonné enregistré).

Pour l'apprentissage d'un format, on effectue les mesures des découpes à localiser sur un plan de palétisation.

A partir de l'image reçue le logiciel calcule la présence des quatre (ou plus) zones d'ombre retenues et la distance entre ces zones.

Il calcule ensuite les coordonnées du barycentre (x, y) et de l'angle (θ) de la découpe, et communique au robot le repère de cette dernière.

Puis le robot se déplace pour faire coïncider son outillage avec le repère de la découpe, puis pour prendre la découpe, sa trajectoire étant alors parfaitement définie.

On va maintenant décrire en référence à la figure 10, un organigramme du procédé selon le mode de réalisation de l'invention plus particulièrement envisagé avec pile de quatre découpes A, B, C, D (cf. figure 5).

Le robot est tout d'abord initialisé (bloc 70), palette en place, la zone étant par exemple la zone d'observation D.

Le robot est ensuite testé en 71 pour savoir s'il est au point repos. S'il n'y est pas on l'y amène en 72.

Ensuite l'opérateur demande en 73 si un cycle doit être effectué.

Si oui, le programme commence selon l'application choisie en 74, tant au niveau cadence que nombre de piles.

Là, deux modes de réalisation sont par exemple envisageables, à savoir celui utilisant des éclairages pulsés (colonne 75), ou celui utilisant un éclairage forcé mais normal (colonne 76).

Plus précisément, dans le cas d'un éclairage pulsé, on démarre celui-ci en 77 (éclairage pulsé asynchrone suivant x,y).

On éclaire alors (bloc 78) la palette suivant X et on prend une image L, puis on éclaire la palette suivant Y et on prend une image M.

On incrémente en 79 la zone (D → A → B → C) i.e. zone = zone + 1.

En 80, on analyse l'image L en pourcentage d'image par rapport à l'image de référence zone 1, puis l'image M en pourcentage d'image par rapport à l'image de référence zone 2.

Si (test 81) les images L et M coïncident avec les deux images de référence, alors on calcule le barycentre (étape 82) et on oriente le robot en X, Y et theta.

On communique les coordonnées X, Y, theta au robot qui se déplace aux points X, Y, θ situé au dessus de la découpe, c'est à dire avec une coordonnée verticale en Z au dessus de l'axe. Z de prise (bloc 84).

Les ventouses descendent au point de prise, puis la découpe est saisie et on la dégage verticalement pour permettre son déplacements en X, Y, theta, avant de la déplacer effectivement au point repos (étape 85).

La découpe est déposée au point d'utilisation et le robot retourne au point repos (étape 86).

La suite d'étapes 84 à 86 est ensuite renouvelée avec la découpe d'après (requête d'un cycle complémentaire en 87).

L'autre mode de réalisation du fonctionnement du procédé décrit en référence à la figure 10 est avec éclairage forcée.

Après démarrage de l'éclairage forcé mais normal en 88 de la palette, on prend en 89 une image avec la caméra.

On incrémente ensuite la zone, de zone en zone + 1 (étape 90), on analyse (étape 91) l'image L en pourcentage d'image de référence par rapport à la zone 1 et la zone 2.

Si l'image L est égale à l'image de référence (test 92), on l'analyse puis on calcule son barycentre et son orientation en X, Y, theta (étape 93), avant de rattraper la procédure préalablement décrite en 83.

Comme indiqué ci-avant (chemin 94) et après l'étape 85 de descente au point de prise, l'analyse et les calculs concernant la découpe suivante sont initiés en revenant à l'étape 74, selon les applications en cadence et en nombre de piles programmées.

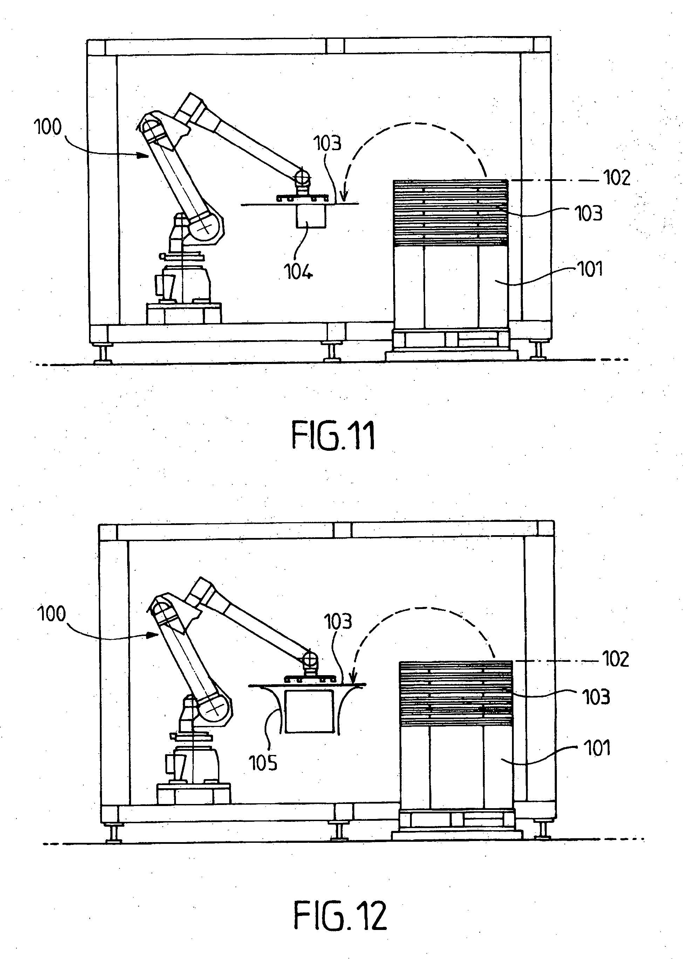

Les figures 11 et 12 montrent deux modes de réalisation du dispositif selon l'invention, particulièrement efficaces et permettant une mise en forme rapide des emballages.

Il s'agit en effet ici de décharger directement par l'intermédiaire du bras robot 100 la palette 101 mise à niveau (trait mixte 102), de découpes 103 en venant mettre cette dernière directement après encollage (non représenté) sur un mandrin de formage 104 (figure 11) ou dans une cavité 105 de pistonnage (figure 12) et ce pour former la boîte de façon directe et extrêmement efficace. On ne passe donc pas par un magasin intermédiaire.

Dans le mode de réalisation de la figure 11 en particulier on vient enrober autour d'un mandrin, la tête de préhension étant dotée en option d'un dispositif (non représenté) de repli des volets de la découpe autour du mandrin.

Certains volets peuvent également être repliés et mis en pression par des dispositifs complémentaires de type vérin ou actionneur motorisé de façon connue en elle-même.

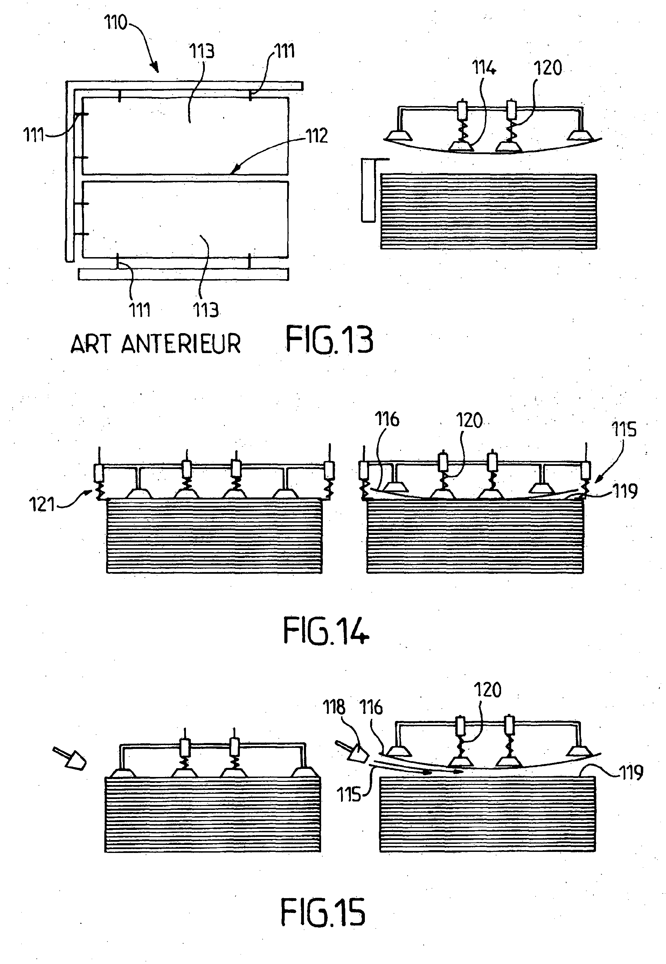

On va maintenant décrire plus précisément en référence aux figures 13 à 21, différents types d'outillage de tête de préhension avec moyens de décollement de la première découpe selon l'invention.

Comme indiqué précédemment lors de la prise verticale d'une découpe à cadence rapide, il y a aspiration de la découpe du dessous, ce qui entraîne déplacements et complications, qui avaient toujours conduit jusqu'à présent l'homme du métier à éviter le type dé solution de l'invention.

Le châssis de dépilage que l'on rencontre dans les machines de conditionnement classique fonctionne en effet toujours avec un magasin dans les piles sont cadrées latéralement par des guides qui évite le problème. Afin d'empêcher l'extraction de deux découpes simultanément, celles-ci sont maintenues par des griffes latérales ou verticales. Pour extraire une découpe de ces griffes, on utilise alors la légère flexion de la découpe au moment où l'on tire dessus, le bombage faisant alors naturellement sortir la découpe des griffes.

Ce type de système est montré sur la partie 110 de la figure 13. Elle permet de constater combien il est difficile de pratiquer ce type de griffage 111 sur plusieurs piles, et ce dans la mesure où au moins une ou deux périphéries 112 des découpes 113 n'est pas atteignable.

Selon un mode de réalisation de l'invention plus particulièrement avantageux on dépile sans désordonner la pile de cartons en procédant de la façon suivante.

On vient positionner des ventouses 114 sur la découpe en différents points et on commence à soulever un ou plusieurs côté de la découpe tout en bloquant la partie centrale de celle-ci (cf. figures 13 et 14).

On crée ainsi des entrées d'air 115, en soulevant les bords 116 des découpes grâce au moyen (ventouse 114 par exemple avec vérin de blocage 120).

Avantageusement des becs souffleur 118, sont prévus ce qui empêche encore plus le mouvement de la découpe du dessous 119 en cours de dépilage ainsi que pour les découpes situées en dessous.

Lorsque l'on soulève les ventouses restées en appui l'effet d'aspiration entre deux découpes superposées est donc considérablement réduit.

Avantageusement des griffes 121 peuvent être prévues en plus (figure 14) mais ne sont pas nécessaires.

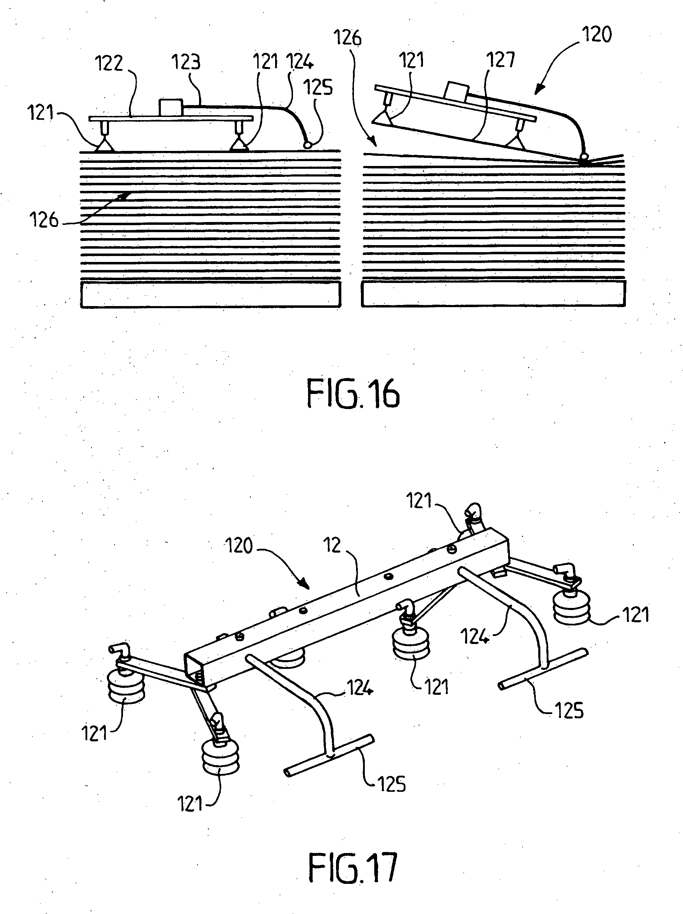

Plusieurs versions d'outillage sont possibles telles qu'on les voit sur les figures 16 à 17.

La figure 16 utilise un dispositif 120 comprenant les ventouses 121 reliées entre elles par une barre d'alimentation en vide 122 ladite barre comportant, rattaché en son milieu 123, une tige 124 terminée par une extrémité 125 disposée de façon décalée par rapport à la barre et ses ventouses de telle sorte qu'elle puisse se positionner latéralement au dessus des découpes 126.

Lorsque l'aspiration s'effectue par le biais des ventouses 121 de la découpe du dessus 127, un léger décalage angulaire latéral est effectué avec les ventouses et leur tige de préhension de sorte que la tige courbe 124 et son point d'extrémité 125 viennent appuyer sur la découpe, libérant ainsi un espace 126 qui va permettre un décollement de la découpe sans soulever la découpe du dessous.

On a représenté sur la figure 17 en perspective un outil 120 tel que décrit en référence à la figure 16.

Celui-ci comporte donc la barre d'alimentation en vidé 122, quatre ou six ventouses 121 connues en elles-mêmes par exemple disposées de façon triangulaire pour former les trois sommets d'un triangle équilatéral, la tige courbe 124 étant par exemple en double, et terminée par une extrémité 125 par exemple constituée par une barre rigide de quelques centimètres.

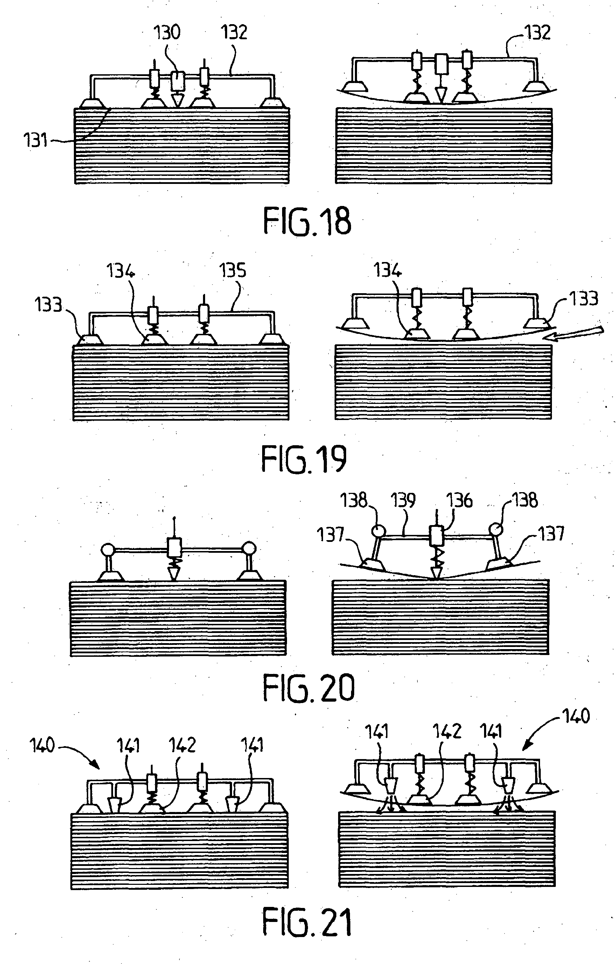

On a représenté sur les figures 18 à 21 d'autres modes de réalisation de moyens ou dispositions permettant le décollement des découpes du dessus par rapport à celle du dessus.

La figure 18 montre l'action d'un vérin vibrant 130, central, appuyant sur la découpe du dessous 131 lors de la montée de l'outillage 132, le but étant de créer un choc aux vibrations sur la découpe pour décoller la découpe du dessous.

La figure 19 montre un autre outillage selon un mode de réalisation avec ventouses décalées 133, 134 reliées par une barre 135, dans la prise, ce qui permet de réduire la surface de frottement entre deux découpes par l'entrée d'air naturel pendant la montée de l'outillage.

La figure 20 est un autre mode de réalisation, plus simple que celui de la figure 18, avec poinçonnage central, par exemple sur un rainage avec le vérin vibrant 136, les ventouses 137 étant articulées en 138 par rapport au bras de préhension 139 de l'outillage.

La figure 21 montre encore un autre mode de réalisation d'un outillage 140 utilisant des soufflages par bec 141, par le dessus et des ventouses 142 sur vérin.

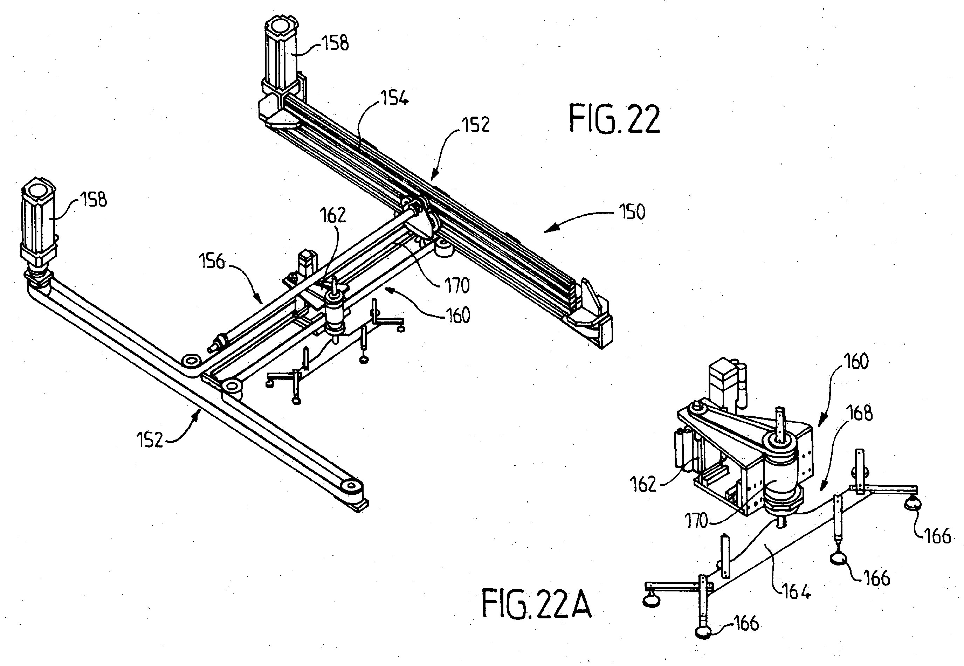

On a représenté sur les figures 22 et 22A un autre mode de réalisation d'un bras robotisé 150 utilisable avec l'invention.

Il comporte deux branches 152 munies de courroies 154 de transmission permettant de déplacer une poutre centrale 156 par le biais de deux moteurs 158, autorisant ainsi le déplacement de la poutre central dans les axes X, Y à l'horizontal.

Le robot 160 lui-même comporte un support 162 comportant la branche 164 de soutien des ventouses 166 de façon connue en elle-même, le support étant en fait constitué d'une tête mobile liée 168 à une courroie centrale 170 de déplacement selon l'axe X.

Un moteur 172 permet le déplacement Z vertical.

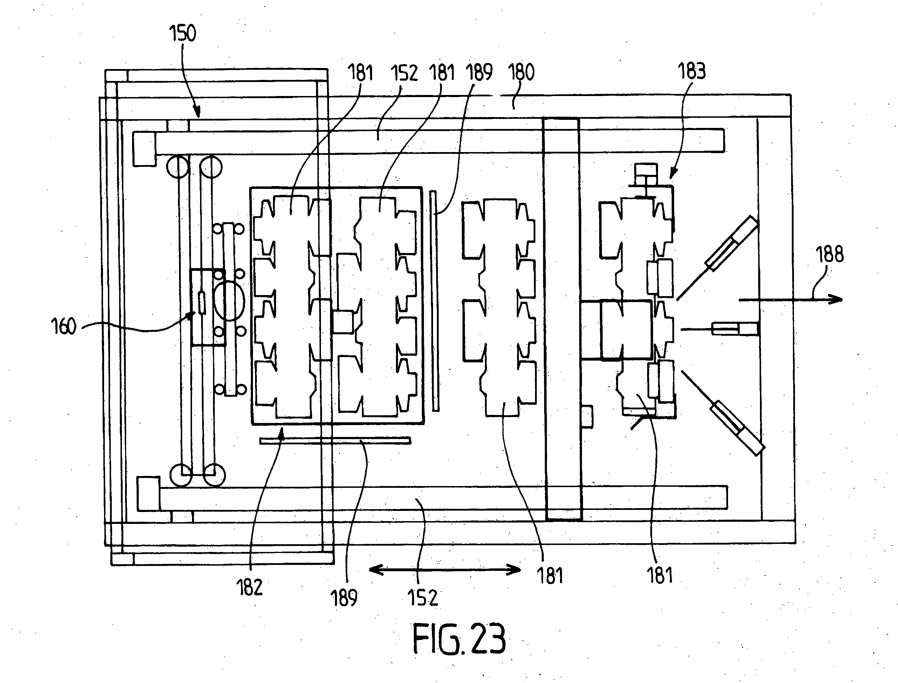

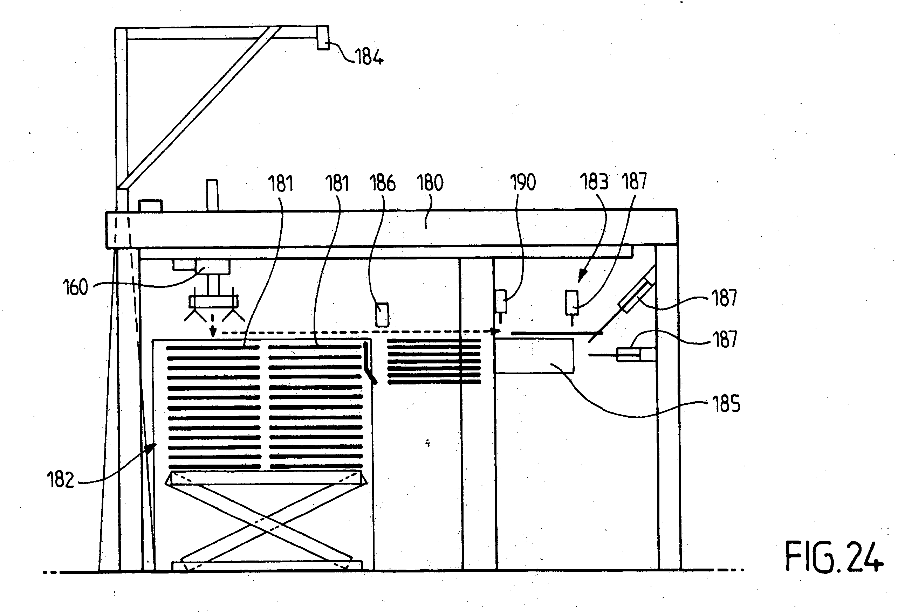

Les figures 23 et 24 montrent l'utilisation d'un robot 150 tel que mentionné aux figures 22 et 22A pour former une caisse monopièce.

La figure 23 est une vue de dessus schématique du dispositif monté sur un châssis 180.

Le robot 160 se déplace entre une portion de préhension des découpes 181 sur le magasin vertical 182, et une position de formage au poste 183.

La caméra 184 (cf. figure 24) regarde la palette 182 et détermine la découpe à prendre en X, Y, theta.

La découpe est ensuite prise par le robot 160 (mouvement X, Y, Z et rotation suivant l'axe externe vertical) et dépose la découpe sur le mandrin 185.

Durant le transfert il y a un encollage en 186 en partie supérieure des rabats de la patte des découpes 181.

La formation de la caisse autour du mandrin 185 est alors effectuée par rabattement vers le bas des panneaux de la ceinture notamment par l'intermédiaire de vérins 187.

Il y a ensuite une mise en pression des rabats inférieurs de la caisse et une éjection dans la direction 188.

Pendant le chargement de la palette le robot vient prendre la découpe dans un magasin tampon (non représenté) pour éviter d'interrompre la production.

Des éclairages rasant 189 sont évidemment bien entendu prévus comme précisé ci-avant.

La figure 24 (vue latérale du dispositif de la figure 23), montre également le déplacement du robot 160, avec application d'un jet d'encre en 190 (pour inscription d'un code barre par exemple), les découpes étant disposées en pile sur le plateau élévateur comme décrit ci-avant en référence aux autres modes de réalisation.

Comme il va de soi et comme il résulte d'ailleurs de ce qui précède la présente invention ne se limite pas aux modes de réalisation plus particulièrement décrits. Elle en embrasse au contraire toutes les variantes incluses dans le cadre des revendications.

## Revendications

1. Procédé de transfert de découpes (6) pour la réalisation de boîtes (2) d'emballage à section polygonale à partir d'un magasin (3) formé d'au moins une pile (4,5) de découpes de matière en feuille de carton ou carton ondulé comportant des échancrures, **caractérisé en ce que**
la pile étant verticale, on localise la découpe (6) du dessus de la pile par caméras (77, 78, 79, 80, 81, 82, 83, 84)
on pré-décolle ladite découpe du reste de la pile,
on saisit la découpe du dessus ainsi localisée par aspiration (85),
on déplace ladite découpe à l'aide d'un bras robotisé et on la libère à un poste suivant, pour ou avant formage ultérieur (86),
et on renouvelle le cycle d'étapes ci-dessus (87) avec la découpe de dessus suivante.

2. Procédé selon la revendication 1, **caractérisé en ce que** on encolle ladite découpe avant le poste suivant qui est un poste de formage (18).

3. Procédé selon l'une quelconque des revendications précédentes, **caractérisé en ce que** il comporte plus de trente cycles par minutes.

4. Procédé selon l'une quelconque des revendications précédentes, **caractérisé en ce que** le magasin (3) comporte plusieurs rangées et/ou plusieurs piles de découpes à partir desquels la découpe du dessus est saisie.

5. Procédé selon l'une quelconque des revendications précédentes, **caractérisé en ce que** on utilise plusieurs bras robotisés (17) travaillant en alternance.

6. Procédé selon l'une quelconque des revendications précédentes, **caractérisé en ce que** le magasin (3) de découpes étant formé par une palette (19),
on place la palette sur un dispositif de mise à niveau,
on fait monter le dessus de la palette jusqu'à un plan d'observation et de prise,
on détecte la découpe du dessus,
et on saisit par aspiration ladite découpe pour l'amener au poste suivant.

7. Procédé selon l'une quelconque des revendications précédentes, **caractérisé en ce que** on détecte la découpe du dessus avec au moins une caméra numérique (10) située au dessus du magasin et centrée par rapport audit magasin,
on filme les découpes du dessus,
et on transmet à un calculateur les données ainsi obtenues pour déterminer la découpe (6)du dessus.

8. Procédé selon la revendication 7, **caractérisé en ce que** on éclaire de façon rasante (77, 78) les découpes du dessus pour générer des ombres du fait des échancrures et des surchappements entre découpes et on écarte (79, 80, 81) les découpes qui n'ont pas toutes leur zones d'ombre comme étant en dessous.

9. Procédé selon la revendication 7, **caractérisé en ce que** on détermine la découpe la plus nette dans le plan de prise pour localiser la découpe du dessus.

10. Procédé selon l'une quelconque des revendications 7 à 9, **caractérisé en ce que**,
à partir des mesures des découpes à localiser dans le plan de prise et de l'image obtenue par la ou les caméras,
on calcule la présence des quatre ou plus zones d'ombre et la distance entre ces zones,
on calcule (82) le barycentre et l'angle de la découpe par rapport à une position de référence,
on communique le résultat de ces calculs au bras robotisé (17) muni de l'outillage d'aspiration et
on déplace ledit robot pour faire coïncider ledit outillage d'aspiration avec le repère de la découpe avant de la saisir par aspiration avec le dit appareillage.

11. Procédé selon l'une quelconque des revendications précédentes, **caractérisé en ce que** pour saisir la découpe du dessus par aspiration on vient positionner les ventouses (15) sur la découpe (6) en différents points, puis on commence à soulever un ou plusieurs cotés de la découpe tout en bloquant une partie de la découpe, pour créer au moins une entrée d'air latéral.

12. Procédé selon l'une quelconque des revendications précédentes, **caractérisé en ce que** le formage se fait par pistonnement dans une cavité (105).

13. Procédé selon l'une quelconque des revendications 10 à 12, **caractérisé en ce que** on forme la boîte au poste de formage par enroulement des découpes autour d'un volume déterminé (104, 185).

14. Procédé selon l'une quelconque des revendications précédentes, **caractérisé en ce qu'**on amène la découpe du dessus au poste de formage par ventouses aspirantes déplacées selon l'axe horizontal par le bras robotisé à une vitesse de translation comprise entre 4m/s et 6m/s.

15. Procédé selon la revendication 14, **caractérisé en ce que** on transfert la découpe au poste de formage par un équipage de deux chariots sur lequel est monté le bras robotisé, ledit équipage étant actionné par un système d'entraînement comprenant un agencement de poulie et de courroie avec moteur électriques.

16. Procédé selon l'une quelconque des revendications précédentes, **caractérisé en ce que** on forme la boîte à partir d'une découpe comportant une suite d'au moins quatre volets principaux terminée par une languette de fixation, reliés entre eux par des premières lignes de pliage parallèles entre elles, ladite suite de volets formant les parois externes de la boîte et étant reliée d'un coté à une suite de rabats par des deuxièmes lignes de pliage perpendiculaires aux dites premières lignes de pliage, pour former le fond de la boîte.

17. Procédé selon l'une quelconque des revendications 1 à 15, **caractérisé en ce que** on forme la boîte à partir d'une découpe comportant un panneau central et quatre rabats périphériques latéraux.

18. Procédé selon l'une quelconque des revendications précédentes, **caractérisé en ce qu'**il comporte une étape de marquage après préhension par le robot et avant dépose au poste suivant.

19. Dispositif (1) de transfert de découpes pour la réalisation de boîtes (2) d'emballage à section polygonale à partir d'un magasin (3) formé d'au moins une pile (4, 5) de découpes (6) de matière en feuille de carton ou carton ondulé comportant des échancrures (7), **caractérisé en ce que**
la pile étant verticale, il comporte
des moyens (8) de localisation de la découpe (12) du dessus (9) de la pile par caméra (10),
des moyens (11) de décollage de ladite découpé (12) par rapport au reste de la pile,
des moyens (14) de saisie de ladite découpe (12) par aspiration comprenant un jeu d'au moins quatre ventouses (15), et
un bras robotisé (17) de déplacement latéral de ladite découpe à un poste suivant (17'), en vue de son formage (18), avant retour à vide pour saisir la découpe de dessus suivante.

20. Dispositif selon la revendication 19, **caractérisé en ce que** il comporte de plus des moyens d'encollage de ladite découpe avant le poste (18) suivant.

21. Dispositif selon l'une quelconque des revendications 19 et 20, **caractérisé en ce que** le magasin (3) comporte plusieurs rangées et/ou plusieurs piles de découpes à partir desquels la découpe du dessus est saisie.

22. Dispositif selon l'une quelconque des revendications 19 à 21, **caractérisé en ce que** il comporte plusieurs bras (17) robotisés travaillant en alternance.

23. Dispositif selon l'une quelconque des revendications 19 à 22, **caractérisé en ce que** le magasin de découpes étant formé par une palette (19),
le dispositif comprend un plateau élévateur (20) de mise à niveau de la palette jusqu'à un plan d'observation et de prise (21), et
des moyens de détection visuelle de la découpe du dessus.

24. Dispositif selon l'une quelconque des revendications 19 à 23, comprenant au moins une caméra (10) numérique située au dessus du magasin et centrée par rapport audit magasin,
des moyens de stockage et de transmission des images numériques ainsi obtenues a un calculateur et
des moyens de calcul à partir des données ainsi obtenues pour déterminer la découpe du dessus.

25. Dispositif selon la revendication 24, **caractérisé en ce que** il comporte des moyens (22) d'éclairage de façon rasante des découpes du dessus pour générer des ombres du fait des échancrures et/ou des surchappements entre découpes et des moyens de sélection de la découpe pertinente agencés pour écarter les découpes qui n'ont pas toutes leur zones d'ombre comme étant en dessous.

26. Dispositif selon la revendication 24, **caractérisé en ce que** il comporte des moyens de sélections de la découpe la plus nette dans le plan de prise pour localiser la découpe du dessus.

27. Dispositif selon l'une quelconque des revendications 24 à 26, **caractérisé en ce que**, il comprend
des moyens de stockage des mesures des découpes à localiser dans le plan de prise et de l'image obtenue par la ou les caméras (10),
des moyens de calcul de la présence des quatre ou plus zones d'ombre et la distance entre ces zones,
des moyens de calcul du barycentre (58) et de l'angle de la découpe (54) par rapport à une position de référence,
des moyens de transmission du résultat de ces calculs au bras robotisé (17) muni de l'outillage d'aspiration et
de moyens pour faire coïncider ledit outillage d'aspiration avec le repère de la découpe avant de la saisir par aspiration avec le dit appareillage.

28. Dispositif selon l'une quelconque des revendications 19 à 27, **caractérisé en ce que** les moyens pour décoller la découpe du dessus comprennent des élément agencés pour soulever un ou plusieurs cotés de la découpe tout en bloquant une partie de la découpe, pour créer au moins une entrée d'air latéral.

29. Dispositif selon l'une quelconque des revendications 19 à 28, **caractérisé en ce que** il comporte un poste de formage par pistonnement dans une cavité (105).

30. Dispositif selon l'une quelconque des revendications 19 à 28, **caractérisé en ce que** il comporte un poste de formage par enroulement des découpes autour d'un volume déterminé (104, 185).

31. Dispositif selon l'une quelconque des revendications 19 à 30, **caractérisé en ce que** il comporte un équipage de deux chariots sur lequel est monté le bras robotisé, ledit équipage étant actionné par un système d'entraînement comprenant un agencement de poulie et de courroie avec moteur électrique.

## Patentansprüche

1. Verfahren zur Verbringung von Zuschnitten (6) für die Herstellung von Verpackungsschachteln (2) mit vieleckigem Querschnitt ausgehend von einem Magazin (3), das durch mindestens einen Stapel (4, 5) von Zuschnitten aus Karton- bzw. Papp- oder Wellpappenbogenmaterial mit Einkerbungen gebildet ist,
**dadurch gekennzeichnet,**
**dass**
- bei vertikalem Stapel der obere Zuschnitt (6) des Stapels mit einer Kamera (77, 78, 79, 80, 81, 82, 83, 84) geortet wird,
- dieser Zuschnitt vom restlichen Stapel vorabgelöst wird,
- der derart geortete obere Zuschnitt durch Ansaugen (85) erfasst wird,
- der Zuschnitt mithilfe eines Roboterarms bewegt wird und an einer nachfolgenden Station für bzw. vor nachfolgender Formung (86) freigegeben wird und
- der oben genannte Schrittezyklus (87) mit dem nächsten oberen Zuschnitt wiederholt wird.

2. Verfahren nach Anspruch 1,
**dadurch gekennzeichnet,**
**dass** der Zuschnitt vor der nächsten Station, bei der es sich um eine Formungsstation (18) handelt, eingekleistert wird.

3. Verfahren nach einem der vorhergehenden Ansprüche,
**dadurch gekennzeichnet,**
**dass** es mehr als dreißig Zyklen pro Minute aufweist.

4. Verfahren nach einem der vorhergehenden Ansprüche,
**dadurch gekennzeichnet,**
**dass** das Magazin (3) mehrere Reihen und/oder Stapel von Zuschnitten aufweist, von denen aus der obere Zuschnitt erfasst wird.

5. Verfahren nach einem der vorhergehenden Ansprüche,
**dadurch gekennzeichnet,**
**dass** mehrere Roboterarme (17) verwendet werden, die abwechselnd arbeiten.

6. Verfahren nach einem der vorhergehenden Ansprüche,
**dadurch gekennzeichnet,**
**dass** bei einem durch eine Palette (19) gebildeten Zuschnitte-Magazin (3)
- die Palette auf eine Niveauregulierungsvorrichtung gestellt wird,
- die Oberseite der Palette bis zu einer Monitoring- und Greifebene angehoben wird,
- der obere Zuschnitt detektiert wird,
- der Zuschnitt durch Ansaugen erfasst wird, damit er der nächsten Station zugeführt wird.

7. Verfahren nach einem der vorhergehenden Ansprüche,
**dadurch gekennzeichnet,**
**dass** der obere Zuschnitt mit mindestens einer Digitalkamera (10) detektiert wird, welche über dem Magazin angeordnet und in Bezug auf das Magazin zentriert ist, die oberen Zuschnitte gefilmt werden und die dadurch gewonnenen Daten zur Bestimmung des oberen Zuschnitts (6) an einen Rechner übertragen werden.

8. Verfahren nach Anspruch 7,
**dadurch gekennzeichnet,**
**dass** die oberen Zuschnitte streifend beleuchtet werden (77, 78), um aufgrund der Einkerbungen und der Überlappungen zwischen den Zuschnitten Schatten zu erzeugen, und die Zuschnitte, die nicht alle ihre Schattenbereiche haben, als darunter liegend ausgeschlossen werden (79, 80, 81).

9. Verfahren nach Anspruch 7,
**dadurch gekennzeichnet,**
**dass** der schärfste Zuschnitt in der Greifebene bestimmt wird, um den oberen Zuschnitt zu orten.

10. Verfahren nach einem der Ansprüche 7 bis 9,
**dadurch gekennzeichnet,**
**dass** aufgrund der Messungen der in der Greifebene zu ortenden Zuschnitte und aufgrund des durch die Kamera(s) aufgenommenen Bildes
- das Vorhandensein der vier Schattenbereiche oder mehr und der Abstand zwischen diesen Bereichen berechnet werden,
- der Schwerpunkt und der Winkel des Zuschnitts in Bezug auf eine Referenzposition berechnet werden (82),
- das Ergebnis dieser Berechnungen dem mit dem Ansaugwerkzeug versehenen Roboterarm (17) übermittelt wird und
- der Roboter verfahren wird, damit das Ansaugwerkzeug und die Zuschnittsmarkierung übereinstimmen, bevor der Zuschnitt von dem Werkzeug angesaugt wird.

11. Verfahren nach einem der vorhergehenden Ansprüche,
**dadurch gekennzeichnet,**
**dass** zum Erfassen des oberen Zuschnitts durch Ansaugen die Sauggreifer (15) auf dem Zuschnitt (6) an unterschiedlichen Stellen positioniert werden, anschließend eine oder mehrere Seiten des Zuschnitts angehoben werden, wobei ein Teil des Zuschnitts blockiert wird, um mindestens eine seitliche Luftzufuhr zu erzeugen.

12. Verfahren nach einem der vorhergehenden Ansprüche,
**dadurch gekennzeichnet,**
**dass** die Formung durch Kompression in einen Hohlraum (105) erfolgt.

13. Verfahren nach einem der Ansprüche 10 bis 12,
**dadurch gekennzeichnet,**
**dass** die Schachtel an der Formungsstation durch Wicklung der Zuschnitte um ein bestimmtes Volumen (104, 185) geformt wird.

14. Verfahren nach einem der vorhergehenden Ansprüche,
**dadurch gekennzeichnet,**
**dass** der obere Zuschnitt mittels saugenden Sauggreifern an die Formungsstation gebracht werden, welche gemäß der horizontalen Achse durch den Roboterarm mit einer Verschiebegeschwindigkeit zwischen 4 m/s und 6 m/s bewegt werden.

15. Verfahren nach Anspruch 14,
**dadurch gekennzeichnet,**
**dass** der Zuschnitt zur Formungsstation durch ein Gespann aus zwei Schlitten gebracht wird, auf dem der Roboterarm angeordnet ist, wobei das Gespann durch ein Antriebssystem mit einer Anordnung aus Riemenscheibe und Riemen mit Elektromotor betätigt wird.

16. Verfahren nach einem der vorhergehenden Ansprüche,
**dadurch gekennzeichnet,**
**dass** die Schachtel aus einem Zuschnitt geformt wird, der eine mit einer Befestigungslasche endende Reihe von mindestens vier Hauptflügeln aufweist, welche über erste, parallel zueinander verlaufende Faltlinien miteinander verbunden sind, wobei die Flügelreihe die Außenwände der Schachtel bildet und auf einer Seite über zweite, senkrecht zu den ersten Faltlinien verlaufende Faltlinien mit einer Reihe von Umklappteilen verbunden ist, um den Boden der Schachtel zu bilden.

17. Verfahren nach einem der Ansprüche 1 bis 15,
**dadurch gekennzeichnet,**
**dass** die Schachtel ausgehend von einem Zuschnitt mit einem mittigen Feld und vier umfänglichen Seiten-Umklappteilen geformt wird.

18. Verfahren nach einem der vorhergehenden Ansprüche,
**dadurch gekennzeichnet,**
**dass** es einen Schritt der Markierung nach dem Greifen durch den Roboter und vor dem Ablegen an der darauffolgenden Station aufweist.

19. Vorrichtung (1) für die Verbringung von Zuschnitten zur Herstellung von Verpackungsschachteln (2) mit vieleckigem Querschnitt ausgehend von einem Magazin (3), das durch mindestens einen Stapel (4, 5) von Zuschnitten (6) aus Karton- bzw. Papp- oder Wellpappenbogenmaterial mit Einkerbungen (7),
**dadurch gekennzeichnet,**
**dass** sie bei vertikalem Stapel Folgendes aufweist:
- Mittel (8) zur Ortung des oben (9) auf dem Stapel befindlichen Zuschnitts (12) mit einer Kamera (10),
- Mittel (11) zum Ablösen des Zuschnitts (12) vom restlichen Stapel;
- Mittel (14) zum Erfassen des Zuschnitts (12) durch Ansaugen, umfassend einen Satz aus mindestens vier Sauggreifern (15) und
- einen Roboterarm (17) für die seitliche Verschiebung des Zuschnitts zu einer nachfolgenden Station (17') zu dessen Formung (18) vor Leerrücklauf zum Erfassen des nächsten oberen Zuschnitts.

20. Vorrichtung nach Anspruch 19,
**dadurch gekennzeichnet,**
**dass** sie ferner Mittel zum Einkleistern des Zuschnitts vor der nächsten Station (18) aufweist.

21. Vorrichtung nach einem der Ansprüche 19 und 20,
**dadurch gekennzeichnet,**
**dass** das Magazin (3) mehrere Reihen und/oder mehrere Stapel von Zuschnitten aufweist, von denen aus der obere Zuschnitt erfasst wird.

22. Vorrichtung nach einem der Ansprüche 19 bis 21,
**dadurch gekennzeichnet,**
**dass** sie mehrere Roboterarme (17) aufweist, die abwechselnd arbeiten.

23. Vorrichtung nach einem der Ansprüche 19 bis 22,
**dadurch gekennzeichnet,**
**dass** bei einem durch eine Palette (19) gebildeten Zuschnitte-Magazin die Vorrichtung eine Hebebühne (20) zur Niveauregulierung der Palette bis zu einer Monitoring- und Greifebene (21) und Mittel zur optischen Detektion des oberen Zuschnitts aufweist.

24. Vorrichtung nach einem der Ansprüche 19 bis 23,
**dadurch gekennzeichnet,**
**dass** sie mindestens eine Digitalkamera (10) aufweist, welche über dem Magazin angeordnet und in Bezug auf das Magazin zentriert ist, Mittel zum Speichern und Übertragen der derart aufgenommenen digitalen Bilder an einen Rechner und Mittel zum Berechnen aufgrund der derart gewonnenen Daten, um den oberen Zuschnitt zu bestimmen.

25. Vorrichtung nach Anspruch 24,
**dadurch gekennzeichnet,**
**dass** sie Mittel (22) aufweist, um die oberen Zuschnitte streifend zu beleuchten, um aufgrund der Einkerbungen und/oder der Überlappungen zwischen den Zuschnitten Schatten zu erzeugen, und Mittel zum Auswählen des relevanten Zuschnitts, welche so angeordnet sind, dass die Zuschnitte, die nicht alle ihre Schattenbereiche haben, als darunter liegend ausgeschlossen werden.

26. Vorrichtung nach Anspruch 24,
**dadurch gekennzeichnet,**
**dass** sie Mittel zum Auswählen des schärfsten Zuschnitts in der Greifebene zum Orten des oberen Zuschnitts aufweist.

27. Vorrichtung nach einem der Ansprüche 24 bis 26,
**dadurch gekennzeichnet,**
**dass** sie Folgendes aufweist:
- Mittel zum Speichern der Messungen der in der Greifebene zu ortenden Zuschnitte und des durch die Kamera(s) (10) aufgenommenen Bildes,
- Mittel zum Berechnen des Vorhandenseins der vier Schattenbereiche oder mehr und des Aastandes zwischen diesen Bereichen,
- Mittel zum Berechnen des Schwerpunktes (58) und des Winkels des Zuschnitts (54) in Bezug auf eine Referenzposition,
- Mittel zum Übermitteln des Ergebnisses dieser Berechnungen an den mit dem Ansaugwerkzeug versehenen Roboterarm (17) und
- Mittel, um das Ansaugwerkzeug und die Zuschnittsmarkierung in Übereinstimmung zu bringen, bevor der Zuschnitt von dem Werkzeug angesaugt wird.

28. Vorrichtung nach einem der Ansprüche 19 bis 27,
**dadurch gekennzeichnet,**
**dass** die Mittel zum Ablösen des oberen Zuschnitts Elemente aufweisen, die angeordnet sind, um eine oder mehrere Seiten des Zuschnitts anzuheben, wobei ein Teil des Zuschnitts blockiert wird, um mindestens eine seitliche Luftzufuhr zu erzeugen.

29. Vorrichtung nach einem der Ansprüche 19 bis 28,
**dadurch gekennzeichnet,**
**dass** sie eine Station zur Formung durch Kompression in einen Hohlraum (105) aufweist.

30. Vorrichtung nach einem der Ansprüche 19 bis 28,
**dadurch gekennzeichnet,**
**dass** sie eine Station zur Formung durch Wicklung der Zuschnitte um ein bestimmtes Volumen (104, 185) aufweist.

31. Vorrichtung nach einem beliebigen der Ansprüche 19 bis 30, **dadurch gekennzeichnet, dass** sie ein Gespann aus zwei Schlitten aufweist, auf dem der Roboterarm angeordnet ist, wobei das Gespann durch ein Antriebssystem mit einer Anordnung aus Riemenscheibe und Riemen mit Elektromotor betätigt wird.

## Claims

1. Method for transferring cutouts (6) for the production of packaging boxes (2) with a polygonal section from a magazine (3) formed of at least one stack (4, 5) of cutouts made of cardboard or corrugated cardboard sheet material comprising notches,
**characterised in that**
the stack being vertical, the cutout (6) on the top of the stack is located by camera (77, 78, 79, 80, 81, 82, 83, 84),
said cut is first detached from the rest of the stack, the top cutout thus located is seized by suction (85), said cutout is moved with the aid of a robot arm and released to a following station, for or prior to subsequent forming (86),
and the cycle of steps above (87) is repeated with the following top cutout.

2. Method according to claim 1, **characterised in that** glue is applied to said cutout before the following station which is a forming station (18).

3. Method according to any one of the preceding claims, **characterised in that** it comprises more than thirty cycles per minute.

4. Method according to any one of the preceding claims, **characterised in that** the magazine (3) comprises a plurality of rows and/or a plurality of stacks of cutouts from which the top blank is seized.

5. Method according to any one of the preceding claims, **characterised in that** a plurality of robot arms (17) is used working in alternation.

6. Method according to any one of the preceding claims, **characterised in that** the magazine (3) of cutouts being formed by a pallet (19),
the pallet is placed on a levelling device,
the top of the pallet is raised to a plane for observation and engagement,
the top cutout is detected,
and said cutout is seized by suction in order to convey it to the following station.

7. Method according to any one of the preceding claims, **characterised in that** the top cutout is detected with at least one digital camera (10) situated above the magazine and centred in relation to said magazine,
the top cutouts are filmed,
and the data thus obtained is transmitted to a computer in order to determine the top cutout (6).

8. Method according to claim 7, **characterised in that** the top cutouts are illuminated with raking light (77, 78) in order to generate shadows due to the notches and overlaps between cutouts and the cutouts which do not have all their shadow zones are disregarded (79, 80, 81) as being below.

9. Method according to claim 7, **characterised in that** the clearest cutout in the plane of engagement is determined in order to locate the top cutout.

10. Method according to any one of claims 7 to 9, **characterised in that**,
from the measurements of the cutouts to be located in the plane of engagement and the image obtained through the camera or cameras,
the presence of the four or more shadow zones and the distance between these zones are calculated,
the barycentre and the angle of the cutout in relation to a reference position are calculated (82),
the result of these calculations is communicated to the robot arm (17) provided with the suction tooling, and said robot is moved to coincide with said suction tooling with the reference point of the blank prior to seizing it by suction with said tooling.

11. Method according to any one of the preceding claims, **characterised in that** in order to seize the top cutout by suction, the suction cups (15) are positioned on the cutout (6) at different points, then lifting of one or more sides of the cutout is commenced while blocking a part of the cutout, in order to create at least one side inlet for air.

12. Method according to any one of the preceding claims, **characterised in that** the forming is carried out by ramming into a cavity (105).

13. Method according to any one of claims 10 to 12, **characterised in that** the box is formed in the forming station by rolling the cutouts around a determined volume (104, 185).

14. Method according to any one of the preceding claims, **characterised in that** the top cutout is conveyed to the forming station by suction cups moved according to the horizontal axis by the robot arm at a speed of translation of between 4 m/s and 6 m/s.

15. Method according to claim 14, **characterised in that** the cutout is transferred to the forming station by a set of two carriages on which the robot arm is mounted, said set being operated by a driving system comprising a pulley and belt arrangement with electric motor.

16. Method according to any one of the preceding claims, **characterised in that** the box is formed from a cutout comprising a series of at least four main sections terminated by a fixing tongue, connected to one another by first fold lines parallel with one another, said series of sections forming the external walls of the box and being connected on one side to a series of flaps by second fold lines perpendicular to said first fold lines, in order to form the bottom of the box.

17. Method according to any one of claims 1 to 15, **characterised in that** the box is formed from a cutout comprising a central panel and four lateral peripheral flaps.

18. Method according to any one of the preceding claims, **characterised in that** it comprises a step for marking after gripping by the robot and before delivery to the following station.

19. Device (1) for transferring cutouts for the production of packaging boxes (2) with a polygonal section from a magazine (3) formed of at least one stack (4, 5) of cutouts (6) made of cardboard or corrugated cardboard sheet material comprising notches (7), **characterised in that**
the stack being vertical, it comprises
means (8) for locating the cutout (12) on the top (9) of the stack by camera (10),
means (11) for detaching said cutout (12) in relation to the remainder of the stack,
means (14) for seizing said cutout (12) by suction comprising a set of at least four suction cups (15), and a robot arm (17) for lateral movement of said cutout to a following station (17'), with a view to its forming (18), before returning empty in order to seize the following top cutout.

20. Device according to claim 19, **characterised in that** it additionally comprises means for applying glue to said cutout before the following station (18).

21. Device according to any one of claims 19 and 20, **characterised in that** the magazine (3) comprises a plurality of rows and/or a plurality of stacks of cutouts from which the top cutout is seized.

22. Device according to any one of claims 19 to 21, **characterised in that** it comprises a plurality of robot arms (17) working in alternation.

23. Device according to any one of claims 19 to 22, **characterised in that** the magazine of cutouts being formed by a pallet (19), the device comprises an elevating platform (20) for levelling the pallet in a plane for observation and engagement (21), and
means for visual detection of the top cutout.

24. Device according to any one of claims 19 to 23, comprising at least one digital camera (10) situated above the magazine and centred in relation to said magazine,
means for storage and transmission of digital images thus obtained to a computer and
means for calculating from the data thus obtained in order to determine the top cutout.

25. Device according to claim 24, **characterised in that** it comprises means (22) for illuminating the top cutouts with raking light in order to generate shadows by virtue of the notches and/or overlaps between cutouts and means for selection of the relevant cutout arranged to disregard the cutouts which do not have all their shadow zones as being below.

26. Device according to claim 24, **characterised in that** it comprises means for selection of the clearest cutout in the plane of engagement in order to locate the top cutout.

27. Device according to any one of claims 24 to 26, **characterised in that** it comprises
means for storage of the measurements of the cutouts to be located in the plane of engagement and the image obtained by the camera or cameras (10),
means for calculating the presence of the four or more shadow zones and the distance between these zones,
means for calculating the barycentre (58) and the angle of the cutout (54) in relation to a reference position, means for transmission of the result of these calculations to the robot arm (17) provided with the suction tooling, and
means for coinciding said suction tooling with the reference point of the cutout before it is seized by suction with said tooling.

28. Device according to any one of claims 19 to 27, **characterised in that** the means for detaching the top cutout comprise elements arranged to lift one or more sides of the cutout while blocking a part of the cutout, in order to create at least one side inlet for air.

29. Device according to any one of claims 19 to 28, **characterised in that** it comprises a station for forming by ramming into a cavity (105).

30. Device according to any one of claims 19 to 28, **characterised in that** it comprises a station for forming by rolling the cutouts around a determined volume (104, 185) .

31. Device according to any one of claims 19 to 30, **characterised in that** it comprises a set of two carriages on which the robot arm is mounted, said set being operated by a driving system comprising a pulley and belt arrangement with electric motor.
